# EUROPEAN PATENT SPECIFICATION

(11) **EP 2 841 673 B1**
(45) Date of publication and mention of the grant of the patent: **13.04.2016**
(21) Application number: 13734522.9
(22) Date of filing: 16.04.2013
(51) Int. Cl.: E06C 1/397, B62B 5/00

(54) **IMPROVED COMBINATION OF A HAND TRUCK AND A LADDER**
VERBESSERTE KOMBINATION AUS EINEM HANDWAGEN UND EINER LEITER
COMBINAISON AMÉLIORÉE D'UN CHARIOT À BRAS ET D'UNE ÉCHELLE

(30) Priority: 24.04.2012 NL 1039560
(43) Date of publication of application: 04.03.2015
(73) Proprietor: Van Dartel, Robert, 3078 GE Rotterdam (NL)
(72) Inventor: Van Dartel, Robert, 3078 GE Rotterdam (NL)
(74) Representative: EP&C
(86) International application number: PCT/NL2013/000023
(87) International publication number: WO 2013/162353

(56) References cited:
- EP-A2- 2 381 061
- DE-A1-102007 007 052
- DE-U1- 9 308 991
- US-A1- 2005 189 733

## Description

### Field of the invention

The invention relates to an improved combination of a hand truck and a ladder, for instance for use in the building industry.

### Background of the invention

A hand truck is a handcart with which objects are displaced over shorter distances. A hand truck generally consists of a number of rods having on the upper side two handles and on the underside two wheels and a carrier plate which is inserted under the objects to be transported. The whole is then tilted such that the objects come to lie against the rods, after which the whole can be moved. Hand tracks are used in warehouses and other locations for the purpose of loading and unloading trucks and for the transport of tools and building materials.

A ladder is a climbing means comprising usually two stiles or bars with a number of rungs or steps therebetween. A step has a horizontal and deeper standing surface than a rung. During use ladders are placed against something or, depending on the embodiment, used in free-standing manner such as a stepladder. Ladders have many embodiments, including: a single or fixed ladder without moving parts; an extension ladder; a trestle ladder, double ladder or stepladder which pivots in the middle and then has a reverse V-shape; a free-standing reform ladder or scissor ladder which can be placed against something but can also be used in free-standing manner in the form of an A; a platform ladder with a small horizontal platform on the top; a telescopic ladder wherein the stiles can slide into each other; and a roof ladder with a hook at the top for securing round the ridge of a roof. In the context of the present invention the term 'ladder' is used in its broadest sense and includes all embodiments of ladders. In addition to being used for domestic and other purposes, ladders are also much used in the building industry.

A combination of a hand truck and a ladder is known, see for instance DE39854C, FR2745544A1, GB753922A or NL8900002A. The advantage is that the two functions of hand truck and ladder are combined in a single piece of equipment. A person can thus transport for instance tools and building materials therewith from a vehicle to a building site, and also has a ladder immediately available there. The whole unit moreover takes up less space during transport and storage.

Drawbacks of known combinations of a hand truck and a ladder are that the wheels and/or the carrier plate get in the way to greater or lesser extent during the use as ladder, and also prevent the combination being folded down to form a really compact whole taking up little space. The invention now provides an improved combination of a hand truck and a ladder which does not have the stated drawbacks, or at least does so to lesser extent.

A combination of a hand truck and a ladder according to the preamble of claim 1 is known from DE 10 2007 007 052.

### Summary of the invention

The invention provides an improved combination of a hand truck and a ladder according to claim 1, the combination comprising wheels and a carrier plate, characterized in that the combination can be easily disassembled into parts and reassembled, wherein a first part comprises the ladder and a second part comprises the wheels and the carrier plate. 'Easily' is understood here to mean without possibly special tools, for instance with a single manual operation and/or with the foot. After disassembly of the combination into parts the wheels and the carrier plate do not then form an obstruction during the use as ladder. The individual parts are also easier to handle, transport and store.

Following disassembly of the combination into parts, the wheels are preferably movable relative to the carrier plate between a first position, in which the rotation axes are at least substantially parallel to the plate, and a second position in which the rotation axes lie at least substantially perpendicularly of the carrier plate. The second part preferably also comprises for this purpose structural parts on which the shafts of the wheels are mounted and which are mounted hingedly on the carrier plate. The wheels and the carrier plate can thus be folded together after use to form a really compact whole taking up little space, and the whole unit takes up minimal space during transport and storage.

In a preferred embodiment the wheels are automatically fixed in the first position during assembly of the combination. This is for instance possible in that the ladder holds the wheels in the first position. No additional means are then required to hold the wheels in this first position when the combination is used as hand truck.

The combination also comprises coupling means for realizing a mutual coupling of the parts, and preferably also locking means for locking the mutual coupling. The parts can thus be mutually coupled and locked to enable use as hand truck, and remain mutually coupled and locked during the use as hand truck. The coupling means can subsequently be unlocked again and the parts uncoupled, after which the ladder can be used as climbing means or the individual parts can be transported or stored.

### Brief description of the figures

The invention is further elucidated hereinbelow on the basis of an exemplary embodiment of a combination according to the invention as shown in the drawings. Herein:
- figure 1 shows a perspective front view of a combination of a hand truck and a ladder, wherein a first part comprising the ladder and a second part comprising wheels and a carrier plate are mutually coupled in locked position, and are thus usable as hand truck;
- figure 2 shows a perspective side view thereof;
- figure 3 shows a perspective side view thereof in unlocked position;

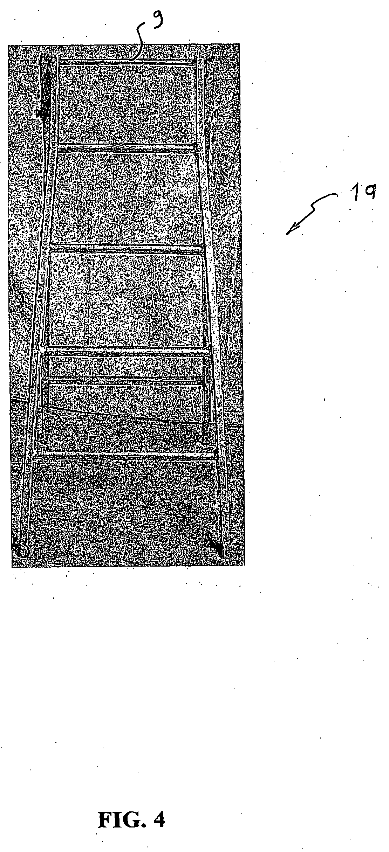

- figure 4 shows a perspective view of the ladder in position of use;
- figure 5 is a detail showing a part of the coupling means;
- figure 6a shows a perspective rear view of the second part in folded-out position; and
- figure 6b shows a perspective view thereof in folded-down position.

### Exemplary embodiment

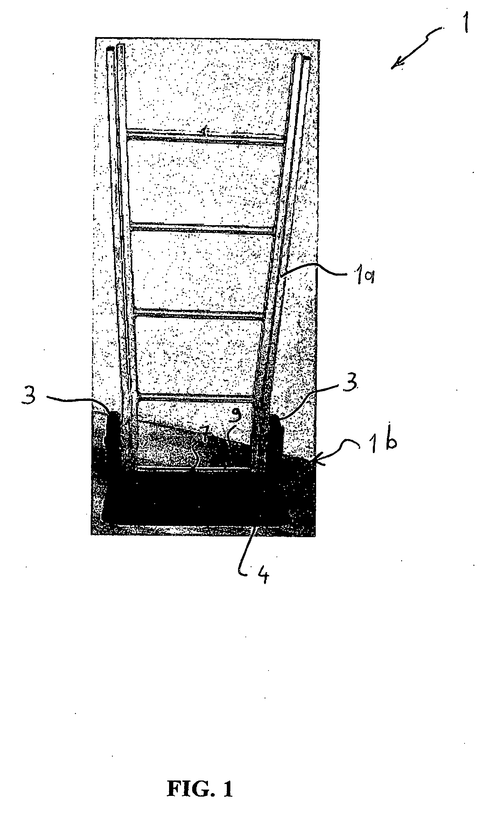

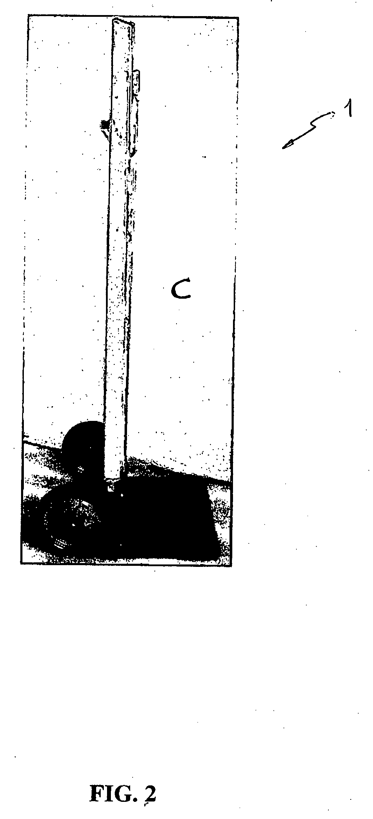

A combination (1) of a hand truck and a ladder according to the invention comprises a first part (1a) comprising a ladder and a second part (1b) comprising two wheels (3) and a carrier plate (4). The parts (1a,1b) can thus be mutually coupled and locked and are thus usable as hand truck, see figures 1 and 2.

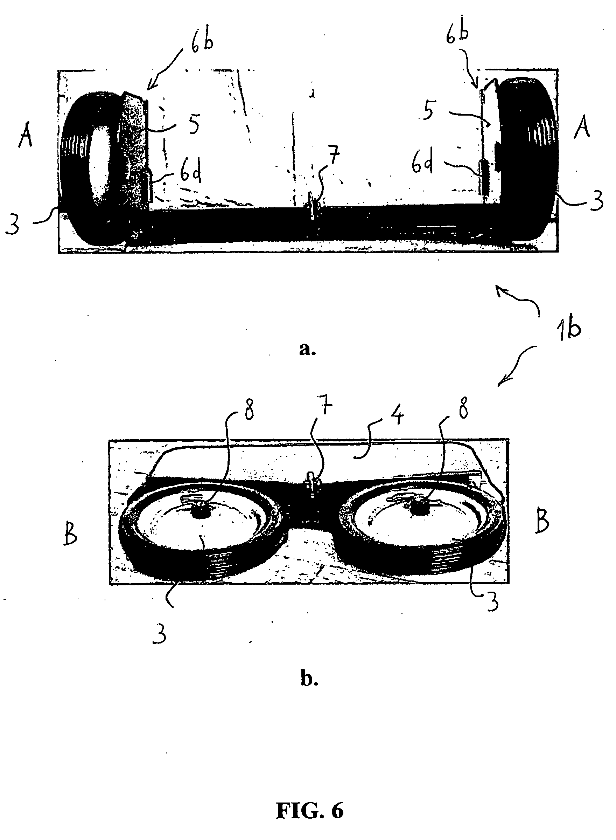

Following disassembly of the combination (1) into the parts (1a,1b), the wheels (3) are movable relative to the carrier plate (4) between a first position (A), in which the rotation axes of wheels (3) are parallel to carrier plate (4), and a second position (B) in which the rotation axes lie perpendicularly of carrier plate (4), see figures 6a and 6b. In the shown exemplary embodiment the second part (1b) also comprises for this purpose two structural parts (5) on which the respective shafts (8) of wheels (3) are mounted, wherein structural parts (5) are in turn mounted hingedly on carrier plate (4), see figures 6a and 6b. Wheels (3) and carrier plate (4) can thus be folded together to form a compact whole, and the whole unit takes up minimal space during transport and storage.

During assembly of the combination (1) the wheels (3) are automatically fixed in the first position (A), in the shown exemplary embodiment in that the ladder is placed between the two structural parts (5) and thus holds the wheels (3) in the first position (A). No additional means are then required to hold wheels (3) in this first position (A) when the combination (1) is used as hand truck.

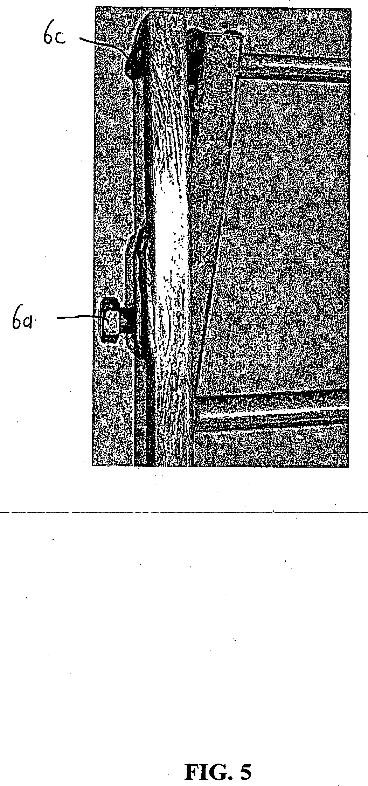

In the shown exemplary embodiment the combination (1) also comprises coupling means (6a-6d) for realizing a mutual coupling of the two parts (1a,1b) these being two first laterally protruding parts (6a) arranged on the sides of the ladder, see figure 5, and two recesses (6b) corresponding therewith and arranged in the two structural parts (5), see figure 6a, in addition to two second laterally protruding parts (6c) arranged on the sides of the ladder, see figure 5, and two third laterally protruding parts (6d) corresponding therewith and arranged on the two structural parts (5), see figure 6a.

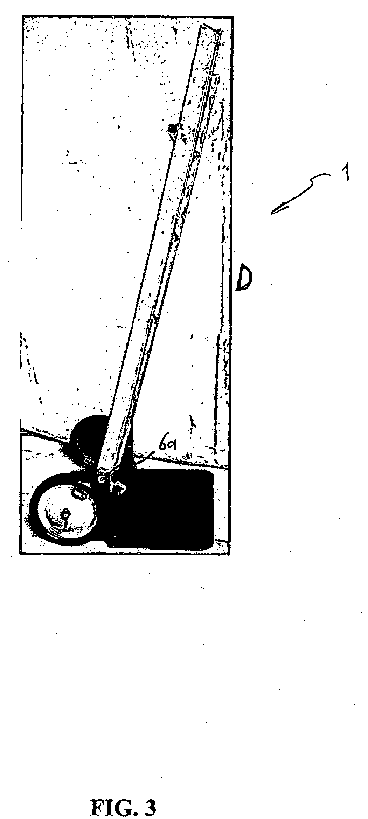

In order to uncouple the parts (1a,1b) the ladder is rotated relative to the second part (1b) between a first position (C), in which the ladder lies perpendicularly of carrier plate (4), see figure 2, and a second position (D) in which the ladder forms an angle, of a maximum of 45°, with carrier plate (4), see figure 3. The first laterally protruding parts (6a) and the recesses (6b) form here a pivot axis. The second laterally protruding parts (6c) release here from the third laterally protruding parts (6d) and the combination (14) can be disassembled into the parts (1a,1b). The reverse sequence is followed in order to couple the parts (1a,1b).

In the shown exemplary embodiment the ladder can be locked in the first position (C) by means of locking means (7) provided for this purpose and which are arranged in the shown exemplary embodiment on the second part (1b) and can engage on the upper rung (9) of the ladder when it is situated in the first position (C), see figures 1 and 2. The ladder is then upside down in the shown exemplary embodiment. The two parts (1a,1b) are thus securely coupled and locked to each other during use of the combination (1) as hand truck, wherein the second laterally protruding parts (6c) and the third laterally protruding parts (6d) can absorb relatively great forces, for instance when the hand truck is lifted upward with a load, for instance up a staircase.

It will be apparent that the invention is not limited to the shown exemplary embodiment but that diverse variants which will be self-evident to a skilled person are possible within the scope of the claims.

## Claims

1. A combination (1) of a hand truck and a ladder, the combination comprising at least one wheel (3) and a carrier plate (4), in which the combination (1) can be easily disassembled into parts and reassembled, wherein a first part (1a) comprises the ladder and a second part (1b) comprises the at least one wheel (3) and the carrier plate (4),
in which the combination (1) also comprises coupling means (6a-6d) for realizing a mutual coupling of the parts (1a, 1b),
**characterized in that**,
the coupling means (6a-6d) comprise at least one first protruding part (6a) arranged on the ladder and at least one recess (6b) corresponding therewith and arranged in the second part (1b), wherein the at least one first protruding part (6a) and the at least one recess (6b) together form a pivot axis, and
the coupling means (6a-6d) comprise at least one second protruding part (6c) arranged on the ladder and at least one third protruding_part (6d) corresponding therewith and arranged on the second part (1b), wherein the at least one second protruding part (6c) and the at least one third protruding part (6d) form a coupling between the first and second parts (1a, 1b).

2. Combination as claimed in claim 1, **characterized in that**, following disassembly of the combination (1) into parts (1a, 1b), the at least one wheel (3) is movable relative to the carrier plate (4) between a first position (A), in which the rotation axis of the at least one wheel (3) is at least substantially parallel to the plate (4), and a second position (B) in which the rotation axis of the at least one wheel (3) lies at least substantially perpendicularly of the carrier plate (4).

3. Combination as claimed in claim 2, **characterized in that** the second part (1b) also comprises a structural part (5) on which the shaft (8) of the at least one wheel (3) is mounted and which is mounted hingedly on the carrier plate (4).

4. Combination as claimed in claim 2 or 3, **characterized in that** the at least one wheel (3) is automatically fixed in the first position (A), preferably by the first part (1a) comprising the ladder, during assembly of the combination (1).

5. Combination as claimed in any of the preceding claims 7, **characterized in that** the combination (1) also comprises locking means (7) for locking the mutual coupling.

6. Combination as claimed in claim 5, **characterized in that** the locking means (7) are arranged on the second part (1b).

7. Combination as claimed in any of the preceding claims, **characterized in that** the second part (1b) comprises two wheels (3) and two structural parts (5) on which the respective shafts (8) of the wheels (3) are mounted wherein the ladder is placed between the two structural parts (5) during assembly of the combination.

8. Combination as claimed in claims 5-7, **characterized in that** the locking means (7) engage on an upper rung (9) of the ladder when it is situated upside down between the two structural parts (5).

9. Combination as claimed in any of the preceding claims, **characterized in that** in order to uncouple the parts (1a, 1b), the ladder is rotated around the pivot axis formed by the at least one first protruding part (6a) and the at least one recess (6b) relative to the second part (1b) between a first position (C) in which the ladder lies perpendicularly of the carrier plate (4), and a second position (D) in which the ladder forms an angle with the carrier plate (4), while releasing the second laterally protruding part (6c) from the third laterally protruding part (6d).

10. Combination as claimed in claim 9, **characterized in that** the ladder in the second position (D) forms an angle of a maximum of 45° with the carrier plate (4).

## Patentansprüche

1. Kombination (1) aus einem Handwagen und einer Leiter, wobei die Kombination mindestens ein Rad (3) und eine Trägerplatte (4) umfasst, wobei die Kombination (1) leicht in Teile zerlegt und wieder zusammengebaut werden kann, wobei ein erstes Teil (1a) eine Leiter umfasst und ein zweites Teil (1b) das mindestens eine Rad (3) und die Trägerplatte (4) umfasst,
wobei die Kombination (1) auch Kopplungsmittel (6a - 6d) umfasst, um eine gegenseitige Kopplung der Teile (1a, 1b) durchzuführen,
**dadurch gekennzeichnet, dass**
die Kopplungsmittel (6a - 6d) mindestens ein erstes vorstehendes Teil (6a), das auf der Leiter angeordnet ist, und mindestens eine Aussparung (6b), die damit korrespondiert und in dem zweiten Teil (1b) angeordnet ist, umfassen, wobei das mindestens eine erste vorstehende Teil (6c) und die mindestens eine Aussparung (6b) zusammen eine Drehachse bilden, und
die Kopplungsmittel (6a - 6d) mindestens ein zweites vorstehendes Teil (6c), das auf der Leiter angeordnet ist, und mindestens ein drittes vorstehendes Teil (6d), das damit korrespondiert und das auf dem zweiten Teil (1b) angeordnet ist, umfassen, wobei das mindestens eine zweite vorstehende Teil (6c) und das mindestens eine dritte vorstehende Teil (6d) eine Kopplung zwischen dem ersten und dem zweiten Teil (1a, 1b) bilden.

2. Kombination nach Anspruch 1, **dadurch gekennzeichnet, dass** nach der Zerlegung der Kombination (1) in Teile (1a, 1b) das mindestens eine Rad (3) relativ zu der Trägerplatte (4) zwischen einer ersten Position (A), in der die Drehachse des mindestens einen Rads (3) mindestens im Wesentlichen parallel zu der Platte (4) ist, und einer zweiten Position (B), in der die Drehachse des mindestens einen Rads (3) mindestens im Wesentlichen senkrecht zu der Trägerplatte (4) liegt, beweglich ist.

3. Kombination nach Anspruch 2, **dadurch gekennzeichnet, dass** das zweite Teil (1b) auch ein strukturelles Teil (5) umfasst, auf dem die Achse (8) des mindestens einen Rads (3) befestigt ist und das gelenkig auf der Trägerplatte (4) befestigt ist.

4. Kombination nach Anspruch 2 oder 3, **dadurch gekennzeichnet, dass** während des Zusammenbaus der Kombination (1) das mindestens eine Rad (3) automatisch in der ersten Position (A), vorzugsweise von dem ersten Teil (1a), das die Leiter umfasst, fixiert wird.

5. Kombination nach einem der vorhergehenden Ansprüche,
**dadurch gekennzeichnet, dass** die Kombination (1) auch Verriegelungsmittel (7) zum Verriegeln der gegenseitigen Kopplung umfasst.

6. Kombination nach Anspruch 5, **dadurch gekennzeichnet, dass** die Verriegelungsmittel (7) auf dem zweiten Teil (1b) angeordnet sind.

7. Kombination nach einem der vorhergehenden Ansprüche,
**dadurch gekennzeichnet, dass** während des Aufbaus der Kombination das zweite Teil (1b) zwei Räder (3) und zwei strukturelle Teile (5), auf denen die jeweiligen Achsen (8) der Räder (3) befestigt sind, umfasst, wobei die Leiter zwischen den zwei strukturellen Teilen (5) angeordnet ist.

8. Kombination nach einem der Ansprüche 5 bis 7,
**dadurch gekennzeichnet, dass** die Verriegelungsmittel (7) auf einer oberen Sprosse (9) der Leiter eingreifen, wenn diese kopfstehend zwischen den zwei strukturellen Teilen (5) angeordnet ist.

9. Kombination nach einem der vorhergehenden Ansprüche,
**dadurch gekennzeichnet, dass**, um die Teile (1a, 1b) zu entkoppeln, die Leiter um die Drehachse, die von dem mindestens einen ersten vorstehenden Teil (6c) und der mindestens einen Aussparung (6b) gebildet wird, relativ zu dem zweiten Teil (1b) zwischen einer ersten Position (C), in der die Leiter senkrecht zu der Trägerplatte (4) liegt, und einer zweiten Position (D) gedreht wird, in der die Leiter einen Winkel mit der Trägerplatte (4) bildet, während sich das zweite seitlich vorstehende Teil (6c) von dem dritten seitlich vorstehenden Teil (6d) löst.

10. Kombination nach Anspruch 9, **dadurch gekennzeichnet, dass** die Leiter in der zweiten Position (D) einen Winkel von maximal 45° mit der Trägerplatte (4) bildet.

## Revendications

1. Combinaison (1) composée d'un chariot de manutention manuel et d'une échelle, la combinaison comprenant au moins une roue (3) et une plaque de support (4), dans laquelle la combinaison (1) peut être facilement démontée en parties et démontée, dans laquelle une première partie (1a) comprend l'échelle et une seconde partie (1b) comprend la au moins une roue (3) et la plaque de support (4),
dans laquelle la combinaison (1) comprend également des moyens de couplage (6a-6d) pour réaliser un couplage mutuel des parties (1a, 1b),
**caractérisée en ce que** :
des moyens de couplage (6a-6d) comprennent au moins une première partie en saillie (6c) agencée sur l'échelle et au moins un évidemment (6b) correspondant à cette dernière et agencé dans la seconde partie (1b), dans laquelle la au moins une première partie en saillie (6c) et le au moins un évidemment (6b) forment ensemble un axe de pivot, et
les moyens de couplage (6a-6d) comprennent au moins une deuxième partie en saillie (6c) agencée sur l'échelle et au moins une troisième partie en saillie (6d) correspondant à cette dernière et agencée sur la seconde partie (1b), dans laquelle la au moins une deuxième partie en saillie (6c) et la au moins une troisième partie en saillie (6d) forment un couplage entre la première et la seconde partie (1a, 1b).

2. Combinaison selon la revendication 1, **caractérisée en ce que**, suite au démontage de la combinaison (1) en parties (1a, 1b), la au moins une roue (3) est mobile par rapport à la plaque de support (4) entre une première position (A) dans laquelle l'axe de rotation de la au moins une roue (3) est au moins sensiblement parallèle par rapport à la plaque (4), et une seconde position (B) dans laquelle l'axe de rotation de la au moins une roue (3) est au moins sensiblement perpendiculaire à la plaque de support (4).

3. Combinaison selon la revendication 2, **caractérisée en ce que** la seconde partie (1b) comprend également une partie structurelle (5) sur laquelle est monté l'arbre (8) de la au moins une roue (3) et qui est montée de manière articulée sur la plaque de support (4).

4. Combinaison selon la revendication 2 ou 3, **caractérisée en ce que** la au moins une roue (3) est automatiquement fixée dans la première position (A), de préférence par la première partie (1a) comprenant l'échelle, pendant l'assemblage de la combinaison (1).

5. Combinaison selon l'une quelconque des revendications précédentes, **caractérisée en ce que** la combinaison (1) comprend également des moyens de verrouillage (7) pour verrouiller le couplage mutuel.

6. Combinaison selon la revendication 5, **caractérisée en ce que** les moyens de verrouillage (7) sont agencés sur la seconde partie (1b).

7. Combinaison selon l'une quelconque des revendications précédentes, **caractérisée en ce que** la seconde partie (1b) comprend deux roues (3) et deux parties structurelles (5) sur lesquelles les arbres (8) respectifs des roues (3) sont montées, dans laquelle l'échelle est placée entre les deux parties structurelles (5) pendant l'assemblage de la combinaison.

8. Combinaison selon les revendications 5 à 7, **caractérisée en ce que** les moyens de verrouillage (7) mettent en prise un échelon supérieur (9) de l'échelle lorsqu'elle est à l'envers entre les deux parties structurelles (5).

9. Combinaison selon l'une quelconque des revendications précédentes, **caractérisée en ce qu'**afin de découpler les parties (1a, 1b), l'échelle est entraînée en rotation autour de l'axe de pivot formé par la au moins une première partie en saillie (6c) et le au moins un évidemment (6b) par rapport à la seconde partie (1b) entre une première position (C) dans laquelle l'échelle est perpendiculaire à la plaque de support (4), et une seconde position (D) dans laquelle l'échelle forme un angle avec la plaque de support (4), tout en libérant la deuxième partie latéralement en saillie (6c) de la troisième partie latéralement en saillie (6d).

10. Combinaison selon la revendication 9, **caractérisée en ce que** l'échelle, dans la seconde position (D), forme un angle de 45° maximum avec la plaque de support (4).
